(19) Europäisches Patentamt
European Patent Office
Office européen des brevets

(11) **EP 1 988 366 A1**

(12) **EUROPEAN PATENT APPLICATION**

(43) Date of publication:
**05.11.2008 Bulletin 2008/45**

(51) Int Cl.:
***G01D 5/24*** *(2006.01)*

(21) Application number: **07425256.0**

(22) Date of filing: **30.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **STMicroelectronics S.r.l.**
**20041 Agrate Brianza (MI) (IT)**

(72) Inventors:
• **Ungaretti, Tommaso**
  **27100 Pavia (IT)**

• **Jawed, Syed Arsalan**
  **38100 Trento (IT)**
• **Gottardi, Massimo**
  **38100 Trento (IT)**
• **Baschirotto, Andrea**
  **15057 Tortona (IT)**

(74) Representative: **Cerbaro, Elena et al**
**STUDIO TORTA**
**Via Viotti 9**
**10121 Torino (IT)**

(54) **Readout-interface circuit for a capacitive microelectromechanical sensor, and corresponding sensor**

(57)    In a capacitive sensor (10), a detection structure (11), of a microelectromechanical type, is provided with a fixed element (4) and a mobile element (5), capacitively coupled to one another, generating a capacitive variation ($\Delta C_m$) as a function of a quantity to be detected, and with a parasitic coupling element (2), capacitively coupled to at least one between the mobile element (5) and the fixed element (4) generating a first parasitic capacitance (27; 28), intrinsic to the detection structure (11); a readout-interface circuit (12) is connected to the detection structure (11) and generates, on an output terminal (23) thereof, an output signal ($V_{out}$) as a function of the capacitive variation ($\Delta C_m$). The readout-interface circuit (12) has a feedback path (29) between the output terminal (23) and the parasitic coupling element (2) so as to drive the first intrinsic parasitic capacitance (27; 28) with the output signal ($V_{out}$).

Fig.5

EP 1 988 366 A1

**Description**

The present invention relates to a readout-interface circuit for a capacitive microelectromechanical (MEMS) sensor and to a corresponding sensor; in particular, in what follows reference will be made, without this implying any loss of generality, to a MEMS microphone of a capacitive type.

As is known, in the last few years, sensors made using MEMS technologies have constituted one of the most promising areas of research in the field of microtechnologies thanks to their low production costs, small dimensions, and reliability. Furthermore, the readout electronics of these sensors can be advantageously integrated in monolithic form using CMOS techniques in the same microchip in which the detection structures of the sensors are made, to form a true integrated microsystem.

In particular, capacitive MEMS sensors, amongst which accelerometers, pressure sensors, and microphones, have found a wide range of applications, for instance in portable systems, thanks to the simplicity and low power consumption of a corresponding readout electronics. Operation of these sensors is based on the detection of a capacitive variation between a mobile element and a fixed element of a corresponding detection structure, which occurs when the mobile element displaces with respect to the fixed element due to an external stimulus (for example, an acceleration or a force).

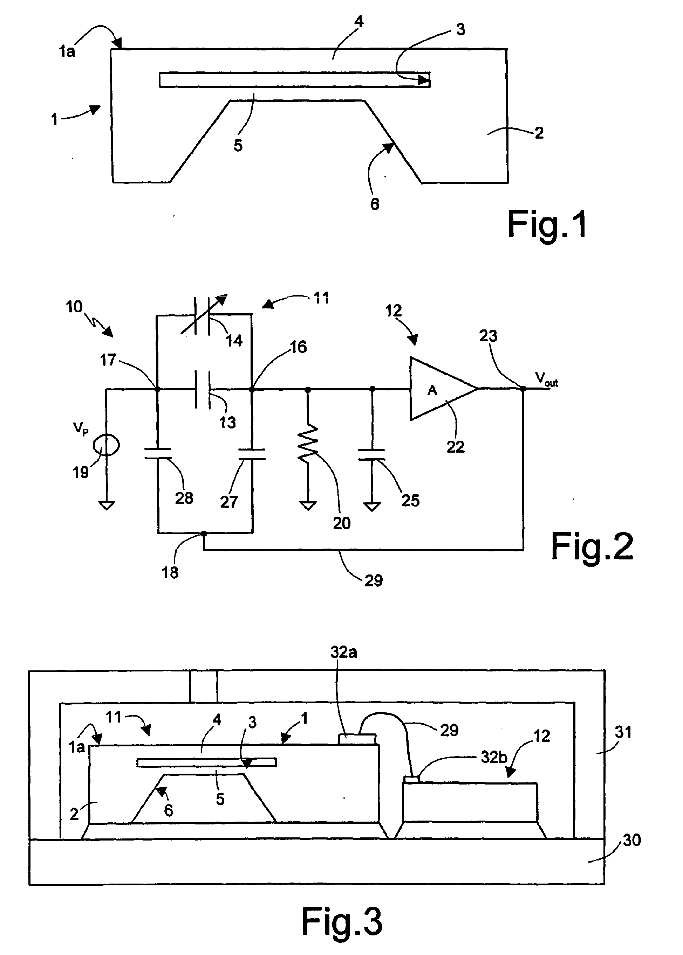

By way of example, Figure 1 shows a detection structure of a MEMS microphone of a known type.

The detection structure comprises a body made of semiconductor material 1, for example, silicon, provided with a substrate 2.

A buried cavity 3 is formed within the body of semiconductor material 1 and is separated from a top surface 1a of the same body by a fixed region 4. The fixed region 4 is fixed with respect to the substrate 2, and has a plurality of holes (not illustrated) that enable the passage of air from the external environment towards the buried cavity 3. A diaphragm 5 separates the buried cavity 3 from a chamber 6 made from the back of the substrate 2 (known in general as "back-chamber"). The diaphragm 5 is flexible and free to move with respect to the fixed region 4 on account of the pressure exerted by the air. The fixed region 4 (known technically as counterelectrode, or "backplate") and the diaphragm 5 form, respectively, a fixed plate and a mobile plate, facing one another, of a detection capacitor, the capacitance of which varies according to their relative distance. In use, the diaphragm 5 undergoes deformations due to sound waves reaching the buried cavity 3, causing a corresponding capacitive variation of the detection capacitor, which can be detected by an appropriate electronic readout-interface coupled to the detection structure.

One of the problems of the capacitive MEMS sensors is constituted by the presence of capacitances, or other parasitic elements, which degrade performance of the readout electronics, reducing its sensitivity and introducing nonlinearity (in frequency, and/or signal dependent). Among the parasitic elements there may be considered parasitic capacitances intrinsic to the electromechanical detection structure of the sensor, which are related to its particular arrangement, and parasitic capacitances external to the detection structure, which are generated, for example, by the interconnections with the readout electronics and by the interaction with the package. The effect of the intrinsic parasitic capacitances, the presence of which cannot be avoided in such microstructures, is particularly important, given that their value is comparable with, if not even greater than, that of the variable capacitance (generally of low value) on which the detection is based.

A wide range of methods have been proposed for eliminating, or reducing, the effects of the aforesaid parasitic elements, to obtain a readout that is insensitive to disturbance. Some of these (see, for example, Mark Lemkin, Bernhard E. Boser, "A Three-Axis Micromachined Accelerometer with a CMOS Position-Sense Interface and Digital Offset Trim Electronics", IEEE Journal of Solid-State Circuits, Vol. 34, No. 4, April 1999) use digital sampling techniques for minimizing the effects of the parasitic capacitances, whilst others (see, for example, Bernhard E. Boser, Roger T. Howe, "Surface Micromachined Accelerometers", IEEE Journal of Solid-State Circuits, Vol. 33, No. 3, March 1996) resort to analog techniques of active cancellation of the parasitic interconnection capacitances, via the so-called "boot-strapping" technique. The boot-strapping technique envisages the use of continuous-time amplifiers with positive feedback, and has better performance in terms of noise with respect to digital techniques. However, particular attention is to be paid to controlling the factor of positive feedback in order to prevent instability phenomena.

Even though each of the methods proposed has specific advantages and peculiarities, none of them has proven altogether satisfactory.

The aim of the present invention is consequently to provide a readout-interface circuit for a capacitive MEMS sensor, which enables reduction in a more efficient way of the effects of the parasitic capacitances associated to the detection structure, and also having a greater sensitivity and linearity of detection.

According to the present invention a capacitive sensor of a MEMS type is provided, as defined in Claim 1.

For a better understanding of the present invention, preferred embodiments thereof are now described, purely by way of nonlimiting example and with reference to the attached drawings, wherein:

-    Figure 1 is a schematic cross-sectional view of a detection structure of a MEMS microphone of a known type;

- Figure 2 is a circuit representation of a MEMS sensor, according to a first embodiment of the present invention;
- Figure 3 is a schematic cross-sectional view of the MEMS sensor of Figure 2;
- Figure 4 shows a possible circuit embodiment of an amplification stage of the sensor of Figure 2;
- Figure 5 is a circuit representation of a MEMS sensor, in accordance with a second embodiment of the present invention; and
- Figure 6 shows the plot of an electrical quantity associated to the sensors of Figure 2 and of Figure 5, and to a sensor of a traditional type.

As illustrated schematically in Figure 2, a capacitive MEMS sensor 10, for example, a microphone, comprises a detection structure 11 of a microelectromechanical type, designed to generate a capacitive variation based on a quantity to be detected (for example sound waves), and a readout-interface circuit 12, connected to the detection structure 11 and designed to generate an output signal $V_{out}$ according to the capacitive variation.

In detail, the detection structure 11 (in itself known, for example of the type described in Figure 1) is represented by means of an equivalent electrical model, comprising a fixed capacitor 13, which illustrates a value of fixed capacitance $C_0$ between a corresponding fixed plate and a corresponding mobile plate, and a variable capacitor 14, which represents the mobile capacitance between the aforesaid plates, given by the sum between a capacitance at rest $C_{m0}$ and a capacitive variation $\Delta C_m$ due to the variation of the quantity to be detected. The fixed capacitor 13 and the variable capacitor 14 are connected in parallel between a first terminal 16 of the detection structure 11, associated, for example, to its mobile plate, and a second terminal 17 of the detection structure 11, associated, for example, to its fixed plate. The detection structure 11 moreover has a third terminal 18 associated to a substrate thereof.

The readout-interface circuit 12 comprises: a biasing generator 19, which generates a biasing voltage Vp (in particular, a d.c. voltage of constant value), connected between a reference potential (for example, ground) and the second terminal 17 of the detection structure 11; a first biasing resistor 20, connected between the first terminal 16 and the reference potential, having a high value of resistance, for example, of the order of G$\Omega$, in particular equal to 1 G$\Omega$; and an amplification stage 22 with gain A, connected between the first terminal 16 and an output terminal 23 of the readout-interface circuit 12, on which it supplies the output signal $V_{out}$. In particular, the voltage of the second terminal 17 of the detection structure 11 is fixed to the biasing voltage $V_p$ and has a low impedance, whilst the first terminal 16, instead, has a high impedance.

The capacitive MEMS sensor 10 moreover has a plurality of parasitic capacitive components, amongst which at least: an external capacitance $C_{ext}$, which represents the whole of the parasitic capacitances of the sensor external to the detection structure 11; a first intrinsic capacitance $C_{P1}$ and a second intrinsic capacitance $C_{P2}$ internal to the detection structure 11 and representing a parasitic capacitance that is generated between the substrate and, respectively, the mobile plate and the fixed plate of the same detection structure (the first parasitic capacitance $C_{P1}$ representing, in general, the most critical parasitic component in so far as it is connected directly to the readout circuit). In a known way, the external capacitance $C_{ext}$ comprises, for example, a parasitic capacitance of the electrical interconnections (for example, bonding wires) between the detection structure 11 and the readout-interface circuit 12, a parasitic capacitance at input to the readout-interface circuit 12, and "pad" capacitance. The intrinsic capacitances $C_{P1}$, $C_{P2}$ are due, for example, to the parasitic capacitive coupling between mutually facing surfaces of the substrate (or of elements connected to the substrate, for example "stoppers") and of the mobile plate or fixed plate, or to the coupling between respective lines of electrical connection.

In particular, the external capacitance $C_{ext}$ is represented schematically in Figure 2 with an external capacitor 25 connected between the input of the amplification stage 22 (first terminal 16) and the reference potential, whilst the intrinsic capacitances $C_{P1}$, $C_{P2}$ of the detection structure 11 are represented schematically with a first intrinsic capacitor 27 and a second intrinsic capacitor 28 connected between the third terminal 18 and, respectively, the first and the second terminals 16, 17 of the detection structure.

According to a particular aspect of the present invention, the readout-interface circuit 12 further comprises a feedback branch 29, which connects the output terminal 23 (and hence the output of the amplification stage 22) to the third terminal 18 (and hence to the substrate) of the detection structure 11.

In one embodiment (Figure 3), the detection structure 11 and the readout-interface circuit 12 are integrated in respective dice of semiconductor material, mechanically coupled to a support 30 and housed within a package 31, conveniently provided with an input opening. Once again, the detection structure 11 of a MEMS microphone is illustrated by way of example (in a way similar to what was described previously with reference to Figure 1, so that parts that are similar are designated by the same reference numbers, and are not described again). In particular, the third terminal 18 of the detection structure 11, electrically connected to its substrate 2 (in a way in itself known and not illustrated), is accessible via a first contact pad 32a set on the surface 1a of the monolithic body 1; and the output terminal 23 of the readout-interface circuit 12 is accessible via a second contact pad 32b, set on a top surface of the respective die. The feedback branch 29 is in this case constituted by a direct electrical connection (for example, a bonding wire) between the respective contact pads 32a, 32b.

In use, the presence of the feedback branch 29 causes the substrate of the detection structure 11 to be biased by the output signal $V_{out}$ at the output of the amplification stage 22, and the first intrinsic capacitor 27 and the second intrinsic capacitor 28 to be driven by the output signal $V_{out}$, thus carrying out "boot-strapping" of the same capacitors.

In particular, since corresponding voltage variations are in this way applied to both terminals of the first intrinsic capacitor 27, the parasitic capacitance of this capacitor can be ideally compensated, and the corresponding effects of nonlinearity in frequency advantageously removed. Instead, in this circuit configuration, the boot-strapping of the second intrinsic capacitor 28 does not affect the performance of the capacitive MEMS sensor 10 in so far as, even though also this capacitor is driven by the output signal $V_{out}$, the second terminal 17 to which it is associated remains fixed to the biasing voltage $V_p$.

It can readily be shown, by applying the principle of charge conservation, that the voltage variation $\Delta V_{P1}$ at the first terminal 16 due to a capacitive variation $\Delta C_m$ is given by the expression:

$$\Delta V_{P1} = \frac{\Delta C_m \cdot (V_{P2} - V_{P1})}{C_{m0} + C_0 + C_{ext} + C_{P1} \cdot (1 - A)}$$

where $V_{P1}$ is the voltage of the first terminal 16 and $V_{P2}$ is the voltage of the second terminal 17.

In the case where the gain A of the amplification stage 22 is equal to 1, the voltage of the first terminal 16 can be boosted up to a theoretical value (i.e., with the first intrinsic capacitance $C_{P1}$ fully compensated) given by:

$$\Delta V_{P1} = \frac{\Delta C_m \cdot (V_{P2} - V_{P1})}{C_{m0} + C_0 + C_{ext}}$$

It is shown moreover that a voltage gain $G_{boost}$ is obtained with respect to a traditional readout-interface circuit (i.e., without the feedback branch 29), given by the expression:

$$G_{boost} = 20 \cdot \log\left(1 + \frac{C_{P1}}{C_{m0} + C_0 + C_{ext}}\right)$$

in the case where the capacitive variation $\Delta C_m$ is negligible with respect to the capacitance at rest $C_{m0}$, the fixed capacitance $C_0$, and the external capacitance $C_{ext}$. For example, a voltage gain is obtained of approximately 6 dB by designing the circuit in such a way that the first intrinsic capacitance $C_{P1}$ is equal to the sum of the capacitance at rest $C_{m0}$, the fixed capacitance $C_0$, and the external capacitance $C_{ext}$.

Considering once again a gain A equal to 1, it may be verified that in any case an increase of the signal-to-noise ratio SNR is obtained, referred to the first terminal 16, with respect to a traditional interface circuit, that is equal to:

$$20 \cdot \log\left(\frac{C_{m0} + C_0 + C_{ext} + C_{P1}}{C_{P1}}\right)$$

and hence once again approximately equal to 6 dB if the circuit is designed in such a way that the first intrinsic capacitance $C_{P1}$ is equal to the sum of the capacitance at rest $C_{m0}$, of the fixed capacitance $C_0$ and of the external capacitance $C_{ext}$.

Given that the boot-strapping technique uses a mechanism of positive feedback (the output signal $V_{out}$ is brought back at input without any phase inversion), to nullify the effect of the parasitic capacitance and boost up the level of the signal and the sensitivity of the circuit, it is required to ensure stability of the feedback loop. Via an analysis of stability of the circuit, it may be shown that at least one of the following conditions is to be verified: the gain A of the amplification stage 22 is to be smaller than or equal to 1, or else, when higher gain values are used, the value of the parasitic capacitance is to be such as to keep the value of the loop gain less than 1 (the whole of the parasitic capacitances must in practice introduce an attenuation such as to compensate for the increase in gain).

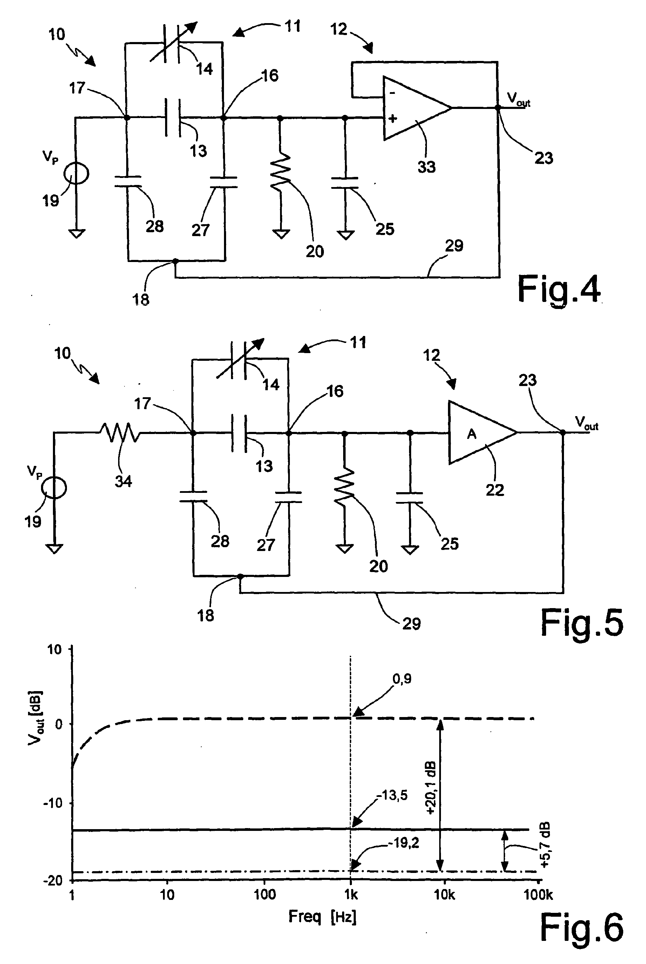

Figure 4 shows a possible circuit embodiment of the amplification stage 22 with ideally unitary gain A, comprising an operational amplifier 33 in voltage follower configuration. The operational amplifier 33 has an output, a positive input connected to the first terminal 16 of the detection structure 11, and a negative input connected directly to its output. The output of the operational amplifier 33 is also connected to the output terminal 23 of the readout-interface circuit 12, and hence to the third terminal 18 (and to the substrate of the detection structure 11) through the feedback branch 29.

According to a further embodiment of the present invention, the readout-interface circuit 12 is configured so that also the boot-strapping of the second intrinsic capacitor 28 contributes to the increase of the voltage gain and of the sensitivity of the capacitive MEMS sensor 10.

As illustrated in Figure 5, the readout-interface circuit 12 comprises, in addition to what was described previously, a second biasing resistor 34, having a high value of resistance, for example, of the order of GΩ, in particular equal to 1 GΩ, arranged between the biasing generator 19 and the second terminal 17; the first and the second terminals 16, 17 consequently both have a high impedance.

In use, the second biasing resistor 34 uncouples the second terminal 17 (and the second intrinsic capacitor 28 connected thereto) from the biasing generator 19, and causes also the second terminal 17 to be effectively driven from the amplification stage 22 through the feedback branch 29 and the second intrinsic capacitor 28, contributing to the increase in the sensitivity of the sensor.

It is possible to show that the voltage variation $\Delta V_{P1}'$ at the first terminal 16 due to the capacitive variation $\Delta C_m$, once again considering a unitary gain A of the amplification stage 22, is given by the expression:

$$\Delta V_{P1}' = \frac{C_{P2} \cdot \Delta C_m \cdot (V_{P2} - V_{P1})}{C_{ext} \cdot (C_{P2} + C_{m0} + C_0 + \Delta C_m)}$$

By designing the detection structure 11 in such a manner that the second intrinsic capacitance $C_{P2}$ is much greater than the sum of the capacitance at rest $C_{m0}$, the fixed capacitance $C_0$, and the capacitive variation $\Delta C_m$, the voltage variation $\Delta V_{P1}'$ is not affected by the values of the parasitic capacitances intrinsic to the detection structure, and depends only on the external capacitance $C_{ext}$.

In this case, the voltage gain $G_{boost}'$ with respect to a traditional readout-interface circuit is given by:

$$G_{boost}' = 20 \cdot \log\left(\frac{C_{P2}}{C_{ext}}\right) + 20 \cdot \log\left(\frac{C_{ext} + C_{m0} + C_0 + C_{P1}}{C_{m0} + C_0 + C_{P2}}\right)$$

By appropriately sizing the circuit, it is possible, for example, to obtain a voltage gain approximately equal to 20 dB.

Considering a gain A equal to 1, a signal-to-noise ratio SNR referred to the first terminal 16 is obtained, which differs from a traditional interface circuit by the term:

$$20 \cdot \log\left(\frac{(C_{m0} + C_0 + C_{ext} + C_{P1}) \cdot C_{P2}}{C_{P1} \cdot C_{P2} + (C_{m0} + C_0) \cdot C_{P1} + C_{ext} \cdot C_{P2}}\right)$$

It is consequently possible to appropriately size the circuit so that the described boot-strapping technique does not adversely affect the signal-to-noise ratio (for example, with $C_{P2} = C_{P1}$, the signal-to-noise ratio does not vary with respect to a traditional circuit).

The behaviour of the readout-interface circuit 12 according to the first and second embodiments has been simulated, considering the following values of capacitance: $C_{P1} = 6.6$ pF; $C_{P2} = 24$ pF; $C_{ext} = 1$ pF; $C_{m0} + C_0 = 6$ pF; $\Delta C_m = 10$ fF.

Figure 6 shows the plot of the output signal $V_{out}$ as the frequency varies in the circuit of Figure 2 (solid line), in the circuit of Figure 5 (dashed line), and in a circuit of a traditional type (dashed-and-dotted line). As may be noted, in the first embodiment an increase in the value of the output signal $V_{out}$ is obtained equal to 5.7 dB with respect to the traditional circuit, whilst in the second embodiment the same increase reaches the value of 20.1 dB. In particular, it is emphasized that this increase is reached without introducing any degradation of the signal-to-noise ratio.

It is also to be noticed that, in the second embodiment of the readout-interface circuit 12, the second biasing resistor 34 introduces an effect of highpass filter in the frequency domain; this circuit will hence not be usable in applications in which it is necessary to detect low-frequency signal components.

From what has been described and illustrated herein, the advantages that the readout-interface circuit according to the present invention makes available are evident.

In particular, the circuit employs a boot-strapping technique for executing a readout that is insensitive to the effects of parasitic capacitances, in particular the intrinsic parasitic capacitances $C_{P1}$, $C_{P2}$ of the detection structure 11 of the capacitive MEMS sensor 10 (which represent the most important parasitic components). In this way, an improved linearity of the signal through the entire frequency band is obtained.

Furthermore, the presence of the intrinsic parasitic capacitances $C_{P1}$, $C_{P2}$ is exploited actively for increasing the level of the output signal $V_{out}$ and the sensitivity of the sensor. In this regard, the second embodiment described proves particularly advantageous, since both of the intrinsic parasitic capacitances $C_{P1}$, $C_{P2}$ are driven by the output signal $V_{out}$ of the amplification stage 22 by means of a positive feedback path.

The circuit described requires at the most the presence of a single additional resistor, the second biasing resistor 34, with respect to traditional readout techniques (without the need for further additional electronics), and the gain in terms of sensitivity does not adversely affect the signal-to-noise ratio. Furthermore, the presence of the second biasing resistor 34 allows operating the sensor in constant-charge modalities, preventing the "pull-in" phenomenon.

Finally, it is clear that modifications and variations can be made to what is described and illustrated herein, without thereby departing from the scope of the present invention, as defined in the annexed claims.

In particular, the boot-strapping technique could be used for eliminating also the effects of the parasitic capacitance external to the detection structure 11 (due, for example, to interconnections) by driving it, instead of with a fixed potential, with the output of the amplification stage 22 (in a way altogether similar to what was described previously for the intrinsic parasitic capacitances $C_{P1}$, $C_{P2}$).

The amplification stage 22 may have different circuit configurations; for example, in the case of unitary gain, a level-shifter stage could be used with a pair of PMOS transistors in source-follower configuration.

Moreover, it is clear that the circuit described can be advantageously used in all capacitive MEMS sensors (for example pressure sensors, force sensors, monoaxial accelerometers), the detection structure of which can be modelled with a single variable capacitance.

## Claims

1. A capacitive sensor (10) comprising: a detection structure (11), of a microelectromechanical type, having a fixed element (4) and a mobile element (5), capacitively coupled to one another and designed to generate a capacitive variation ($\Delta C_m$), which is a function of a quantity to be detected, and a parasitic coupling element (2), capacitively coupled to at least one between said mobile element (5) and said fixed element (4), generating a first parasitic capacitance (27; 28), intrinsic to said detection structure (11); and a readout-interface circuit (12), electrically connected to said detection structure (11) and configured to generate, on an output terminal (23) thereof, an output signal ($V_{out}$) according to said capacitive variation ($\Delta C_m$),
**characterized in that** said readout-interface circuit (12) comprises a feedback path (29) between said output terminal (23) and said parasitic coupling element (2), configured so as to drive said first parasitic capacitance (27; 28) with said output signal ($V_{out}$).

2. The sensor according to claim 1, wherein said parasitic coupling element is a substrate (2) of said detection structure (11), said fixed element (4) being fixed with respect to said substrate (2) and said mobile element (5) being configured so as to move with respect to said fixed element (4) according to said quantity to be detected; said feedback path further comprising an electrical connection (29) between said output terminal (23) and said substrate (2).

3. The sensor according to claim 1 or 2, wherein said feedback path comprises a direct electrical connection (29) between said output terminal (23) and said parasitic coupling element (2).

4. The sensor according to any one of the preceding claims, wherein said readout-interface circuit (12) has a first input terminal (16) connected to said detection structure (11), and comprises an amplification stage (22), connected between said first input terminal (16) and said output terminal (23), said feedback path (29) forming a positive feedback branch of said amplification stage.

**5.** The sensor according to claim 4, wherein said amplification stage (22) has a substantially unitary gain (A).

**6.** The sensor according to any one of the preceding claims, wherein said parasitic coupling element (2) is capacitively coupled to said mobile element (5), generating said first parasitic capacitance (27), and also to said fixed element (4) generating a second parasitic capacitance (28), which is intrinsic to said detection structure (11); said feedback path (29) being configured so as to drive said first parasitic capacitance (27) and second parasitic capacitance (28) with said output signal ($V_{out}$).

**7.** The sensor according to claim 6, wherein said readout-interface circuit (12) has a first input terminal (16) and a second input terminal (17), and comprises a first resistive element (34) and a second resistive element (20), connected, respectively, to said first input terminal (16) and second input terminal (17); said mobile element (5) and said fixed element (4) being connected, respectively, to said first input terminal (16) and second input terminal (17).

**8.** The sensor according to claim 7, wherein said first and second resistive elements (34, 20) have a high impedance.

**9.** The sensor according to claim 7 or 8, wherein said readout-interface circuit (12) further comprises a biasing generator (19), connected to said second input terminal (17) through said second resistive element (34).

**10.** The sensor according to any one of the preceding claims, chosen in the group comprising: a microphone, a monoaxial accelerometer, a pressure sensor, and a force sensor.

**11.** A readout-interface circuit (12), for a capacitive sensor (10) according to any one of the preceding claims.

**12.** A readout method for a capacitive sensor (10) provided with a detection structure (11), of a microelectromechanical type, designed to generate a capacitive variation ($\Delta C_m$) according to a quantity to be detected, and having at least one first parasitic capacitance (27; 28) intrinsic to said detection structure (11); said method comprising the step of generating an output signal ($V_{out}$) as a function of said capacitive variation ($\Delta C_m$),
**characterized in that** said step of generating comprises feeding back said first parasitic capacitance (27; 28) with said output signal ($V_{out}$) .

**13.** The method according to claim 12, wherein said capacitive sensor (10) further has a second parasitic capacitance (28) intrinsic to said detection structure (11), said first and second intrinsic parasitic capacitances (27, 28) being present between a substrate (2) and, respectively, a mobile element (5) and a fixed element (4) of said detection structure (11); said step of generating comprising biasing said substrate (2) with said output signal ($V_{out}$) so as to feed back said first and second intrinsic parasitic capacitances (27, 28) with said output signal ($V_{out}$) .

**14.** The method according to claim 13, wherein said mobile element (5) and said fixed element (4) are connected, respectively, to a first terminal (16) and to a second terminal (17) of said detection structure (11); said step of generating further comprising connecting said first and second terminals (16, 17) at a high-impedance.

Fig.1

Fig.2

Fig.3

Fig.4

Fig.5

Fig.6

**European Patent Office**

**EUROPEAN SEARCH REPORT**

Application Number

EP 07 42 5256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 136 248 A (UNITED TECHNOLOGIES CORP [US]) 3 April 1985 (1985-04-03) | 1,2,6, 10-13 | INV. G01D5/24 |
| A | * page 5, line 2 - page 8, line 17; figures 4,5 * ----- | 3-5,14, 17 | |

TECHNICAL FIELDS SEARCHED (IPC)

G01D
G01P
G01L
H03K

The present search report has been drawn up for all claims

| Place of search | Date of completion of the search | Examiner |
|---|---|---|
| The Hague | 28 November 2007 | Chapple, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 42 5256

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2007

| Patent document cited in search report | | Publication date | Patent family member(s) | | Publication date |
|---|---|---|---|---|---|
| EP 0136248 | A | 03-04-1985 | DE | 3477608 D1 | 11-05-1989 |
| | | | JP | 1750232 C | 08-04-1993 |
| | | | JP | 4031051 B | 25-05-1992 |
| | | | JP | 60071926 A | 23-04-1985 |
| | | | US | 4517622 A | 14-05-1985 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARK LEMKIN ; BERNHARD E. BOSER.** A Three-Axis Micromachined Accelerometer with a CMOS Position-Sense Interface and Digital Offset Trim Electronics. *IEEE Journal of Solid-State Circuits,* April 1999, vol. 34 (4

- **BERNHARD E. BOSER ; ROGER T. HOWE.** Surface Micromachined Accelerometers. *IEEE Journal of Solid-State Circuits,* March 1996, vol. 33 (3